# EUROPÄISCHE PATENTANMELDUNG

(11) **EP 3 379 314 A2**
(43) Veröffentlichungstag der Anmeldung: **26.09.2018**
(21) Anmeldenummer: 18159415.1
(22) Anmeldetag: 01.03.2018
(51) Int. Cl.: G02B 7/02, F41G 1/40, G02B 7/04, G02B 23/16

(54) **FÜHRUNGSSYSTEM**

(30) Priorität: 01.03.2017 DE 102017104299
(71) Anmelder: Carl Zeiss Sports Optics GmbH, 35576 Wetzlar (DE)
(72) Erfinder: SCHMITT, Christoph, 35444 Biebertal (DE); SCHLIERBACH, Armin, 35638 Leun-Bissenberg (DE)
(74) Vertreter: Blumbach · Zinngrebe Patent- und Rechtsanwälte

(57) **Zusammenfassung**

Die Erfindung betrifft ein Führungssystem, insbesondere zur linearen Fokussierungsführung für ein optisches Gerät wie ein Fernglas oder ein Zielfernrohr.

Das Führungssystem umfasst dabei einen Führungskörper und ein Schiebeglied, welches entlang einer Führungsachse relativ zu dem Führungskörper verschiebbar gelagert ist. Es ist ein Lagerelement vorgesehen zur verschiebbaren Lagerung des Schiebeglieds entlang der Führungsachse. Dabei ist das Lagerelement ausgebildet, ein sich radial zur Führungsachse erstreckendes Radialspiel zwischen dem Schiebeglied und dem Führungskörper zu vermindern.

## Beschreibung

Die Erfindung betrifft ein Führungssystem, insbesondere zur linearen Fokussierungsführung für ein optisches Gerät.

Bei optischen Geräten mit einer Fokussiereinstellung werden zur Fokussierung, d.h. zur Scharfstellung eines Objekts, Abstände zwischen optischen Elementen des Geräts variiert, um den Strahlengang zu beeinflussen. Häufig kann ein Benutzer an einem Bedienelement eine Drehbewegung ausführen, welche in eine Verschiebung eines Fokussiergliedes, nachfolgend auch als Schiebeglied bezeichnet, umgesetzt wird. Ein solches Schiebeglied kann etwa eine Linse oder eine Linsengruppe fassen, welche demnach entlang der optischen Achse verschoben werden kann.

Während das Schiebeglied entlang der optischen Achse verschiebbar ist, sind Freiheitsgrade radial zur optischen Achse in der Regel unerwünscht. Vielmehr ist eine spielfreie Führung des Schiebeglieds entlang der Fokussierachse wünschenswert. Dazu werden diejenigen radialen Toleranzen, welche für die Gewährleistung einer leichtgängigen Längsbeweglichkeit verbleiben, häufig ausgeglichen.

Beispielsweise gibt es Ferngläser, bei denen das Spiel in der Führung durch eine Metallfeder kompensiert wird. Dies ist allerdings häufig mit dem Nachteil verbunden, dass aufwändige Ausfräsungen in die Fassungen eingebracht werden. Zudem wird das Gehäuse durch das Metall einer Feder relativ stark beansprucht, was sich auch in der Form von Abrieb bemerkbar macht.

Die europäische Patentanmeldung EP 2 365 274 A3 zeigt ein Zielfernrohr umfassend einen Außentubus und einen darin angeordneten Innentubus, wobei der Innentubus ein optisches Umkehrsystem mit mindestens zwei in Fassungen eingefassten optischen Elementen aufweist, die in Richtung der Längsachse des Zielfernrohrs beweglich gelagert sind, wobei durch die Bewegung der Linsen eine Veränderung der Vergrößerung bewirkbar ist, wobei die Fassungen innerhalb einer Führungshülse durch ein elastisches Mittel vorgespannt gelagert sind. Zwar sieht eine Ausführungsform vor, dass die elastischen Mittel aus Kunststoff ausgebildet sind, allerdings werden auch hier die elastischen Mittel in Ausnehmungen eingebracht. Die Führung der Fassungen in der Führungshülse ist zudem hinsichtlich der Laufruhe und des Reibungswiderstandes verbesserungsfähig.

So kann eine deutlich schwerere Bewegung des Schiebegliedes entstehen, wenn beispielsweise das Spiel zwischen der Fassung und der Führungshülse durch Federn, Magnete oder Elastomere auf eine Seite verlagert wird.

Eine Aufgabe der Erfindung ist es, ein Führungssystem bereitzustellen, welches eine spielfreie Führung entlang einer Führungsachse erlaubt, insbesondere, um eine optische Baugruppe spielfrei entlang einer optischen Achse zu führen.

Ein Aspekt der Aufgabe der Erfindung ist es, ein besonders laufruhiges, reibungsarmes und zugleich kostengünstiges Führungssystem bereitzustellen, wobei insbesondere auf Ausfräsungen oder Ausnehmungen verzichtet werden kann und verhältnismäßig große Toleranzen ausgeglichen werden können.

Ein weiterer Aspekt der Aufgabe der Erfindung ist es, eine zuverlässige Führung auch für ungünstige Verhältnisse zwischen dem Durchmesser und der Länge eines Schiebeglieds zu ermöglichen, insbesondere, um einen sogenannten Stick-Slip-Effekt bzw. ein "Rattern" zu verhindern.

Die Aufgabe wird durch die Gegenstände der unabhängigen Ansprüche gelöst. Vorteilhafte Weiterbildungen der Erfindung sind Gegenstände der abhängigen Ansprüche sowie der in der Beschreibung erwähnten Ausführungsformen.

Die Erfindung betrifft ein Führungssystem, insbesondere zur linearen Fokussierungsführung für ein optisches Gerät mit einem eine Führungsachse definierenden Führungskörper und einem Schiebeglied, welches entlang der Führungsachse relativ zu dem Führungskörper verschiebbar gelagert ist. Das Schiebeglied kann im Sinne der Erfindung eine zur Fokussierung eines Objektes auf eine Zwischenbildebene nutzbare Fokussierlinse umfassen.

Zwischen dem Schiebeglied und dem Führungskörper erstreckt sich radial zur Führungsachse ein vorzugsweise geringfügiges Radialspiel, welches insbesondere die Verschiebbarkeit des Schiebeglieds gewährleistet.

Ferner ist ein Lagerelement umfasst, welches zwischen dem Schiebeglied und dem Führungskörper angeordnetes ist, derart, dass das Lagerelement das Radialspiel zwischen dem Schiebeglied und dem Führungskörper vermindert. Vorzugsweise wird das Radialspiel ausgeglichen bzw. überbrückt.

Das vorzugsweise an dem Schiebeglied befestigte Lagerelement weist gemäß einer ersten Ausführungsform eine Lagerfläche zur verschiebbaren Lagerung des Schiebeglieds auf, derart, dass die Lagerfläche mit einer vorzugsweise an dem Führungskörper ausgebildeten, zugehörigen Widerlagerfläche in Gleitkontakt steht, wenn das Schiebeglied entlang der Führungsachse verschoben wird.

Das Lagerelement weist einerseits eine Übermaßpassung bezüglich des Radialspiels auf, andererseits weist es eine Nachgiebigkeit in radialer Richtung zum Ausgleich der Übermaßpassung auf.

Das Lagerelement ist demnach kompressibel und gibt im eingebauten Zustand nach, derart, dass das Radialspiel passgenau überbrückt ist. Vorzugsweise ist das Lagerelement zudem elastisch, so dass die Lagerfläche eine Andrückkraft auf die zugehörige Widerlagerfläche ausübt. Dadurch können Toleranzen des Radialspiels, insbesondere entlang der Führungsachse bei Verschiebung ausgeglichen werden.

Durch die Befestigung des Lagerelements ist das Lagerelement gegen ein Verrutschen gesichert, wenn das Schiebeglied verschoben wird. Die Befestigung bzw. Sicherung des Lagerelements kann insbesondere ohne eine Ausnehmung erfolgen. Beispielsweise kann das Lagerelement an dem Schiebeglied festgeklebt sein. Dadurch können die Herstellungskosten reduziert werden.

Das Lagerelement braucht nicht zwangsläufig an dem Schiebeglied befestigt zu sein. Alternativ kann das Lagerelement auch an dem Führungskörper befestigt sein. Die zugehörige Widerlagerfläche kann in diesem Fall an dem Schiebeglied ausgebildet sein.

Das Lagerelement umfasst vorzugsweise eine nachgiebige, insbesondere elastische Komponente, um die Nachgiebigkeit des Lagerelements zu bewirken und eine Gleitkomponente, welche die Lagerfläche des Lagerelements bildet. Das Lagerelement umfasst demnach zumindest zwei verschiedene Komponenten mit unterschiedlichen Materialien.

Die nachgiebige Komponente des Lagerelements weist dabei eine höhere Kompressibilität als die Gleitkomponente auf. Dafür weist die Gleitkomponente einen geringeren Reibungskoeffizienten als die nachgiebige Komponente auf. Dadurch zeichnet sich das Lagerelement in vorteilhafter Weise durch eine hohe Kompressibilität bei gleichzeitig hervorragender Gleitfähigkeit aus.

Die nachgiebige Komponente des Lagerelements kann insbesondere aus Schaumstoff gefertigt sein, während die Gleitkomponente vorzugsweise Polytetrafluorethylen (PTFE) umfasst. PTFE hat den Vorteil, dass Haft- und Gleitreibung gleich groß sind, so dass ein "Rattern" verhindert werden kann. Es können aber auch andere Materialien, insbesondere solche mit geringen Reibungskoeffizienten vorgesehen sein. Beispielsweise können auch Polyoxymethylen (POM), Polyetheretherketon (PEEK) und/oder Polyvinylidenfluorid (PVDF) umfasst sein.

Das Lagerelement kann insbesondere aus mehreren Schichten aufgebaut sein, wobei die oberste Schicht die Gleitkomponente bildet, und eine darunter befindliche Schicht die nachgiebige Komponente bildet. Ferner können weitere Schichten vorgesehen sein, insbesondere z.B. eine Zwischenschicht, welche die Gleitschicht mit der nachgiebigen Schicht verbindet. Es kann demnach eine Verbindungskomponente, z.B. aus Polyethylen (PE) und/oder Polyethylenterephthalat (PET), vorgesehen sein, welche die Gleitkomponente mit der nachgiebigen Komponente verbindet.

In einer Ausführungsform der Erfindung ist der Führungskörper als Hülse, insbesondere als tubuläre Hülse ausgebildet. Allgemein gesagt kann der Führungskörper demnach das Schiebeglied radial umgeben derart, dass eine innere Oberfläche des Führungskörpers einer äußeren Oberfläche des Schiebeglieds zugewandt ist. Das Lagerelement kann dann an der äußeren Oberfläche des Schiebeglieds befestigt sein und die innere Oberfläche des Führungskörpers kann die Widerlagerfläche umfassen. Möglich ist allerdings auch die umgekehrte Konfiguration, in welcher das Lagerelement an der inneren Oberfläche des Führungskörpers befestigt ist und die Widerlagerfläche an dem Schiebeglied ausgebildet ist.

Grundsätzlich braucht das Radialspiel zwischen dem Schiebeglied und dem Führungskörper sich nicht ringsum das Schiebeglied zu erstrecken. In einer Ausführungsform der Erfindung ist allerdings vorgesehen, dass das sich radial zur Führungsachse erstreckende Radialspiel zwischen dem Schiebeglied und dem Führungskörper sich auch tangential über den gesamten Umfang erstreckt, derart, dass das Schiebeglied radial zur Führungsachse ringsum von dem Führungselement beabstandet ist. Es können dann mehrere Lagerelemente vorgesehen sein.

Zusätzlich zu dem Lagerelement können insbesondere ein zweites und ein drittes Lagerelement umfasst sein, welche wiederum jeweils eine Lagerfläche zur verschiebbaren Lagerung des Schiebeglieds umfassen, derart, dass die Lagerflächen des zweiten und dritten Lagerelements jeweils mit einer zugehörigen Widerlagerfläche in Gleitkontakt stehen, wenn das Schiebeglied entlang der Führungsachse verschoben wird.

Ein Lagerelement ist vorzugsweise wesentlich kleiner als die äußere Oberfläche des Schiebeglieds, um die Reibung zu minimieren. Es kann vorgesehen sein, dass ein Lagerelement sich tangential zur Führungsachse über einen Winkel von weniger als 45 Grad, vorzugsweise von weniger als 20 Grad, besonders bevorzugt von weniger als 10 Grad erstreckt. Ferner ist ein Lagerelement insbesondere als z.B. runde Scheibe ausgebildet und hat auch längs zur Führungsachse eine Erstreckung, welche geringer ist als die Länge des Schiebeglieds. Sowohl das Lagerelement, als auch das zweite und dritte Lagerelement können somit als Plättchen ausgebildet sein.

Auch das zweite und dritte Lagerelement sind vorzugsweise jeweils an dem Schiebeglied befestigt, und der Führungskörper umfasst die jeweilige Widerlagerfläche, derart, dass die Lagerflächen der an dem Schiebeglied befestigten zweiten und dritten Lagerelemente an den jeweiligen Widerlagerflächen des Führungskörpers entlang gleiten, wenn das Schiebeglied entlang der Führungsachse verschoben wird. Wiederum ist grundsätzlich auch die umgekehrte Konfiguration möglich.

Vorzugsweise ist vorgesehen, dass das (erste) Lagerelement eine höhere Nachgiebigkeit aufweist, als das zweite und/oder das dritte Lagerelement. Diese weisen vielmehr insbesondere eine vernachlässigbare Nachgiebigkeit auf.

Mit anderen Worten ist vorzugsweise eines, besonders bevorzugt lediglich eines der Lagerelemente aus einer Gruppe aus drei oder mehr Lagerelementen dazu bestimmt, das Radialspiel in nachgiebiger Weise auszugleichen, wobei eine Gruppe von Lagerelementen derart angeordnet sein kann, dass das Schiebeglied ringsum von dem Führungskörper beabstandet ist.

Es kann vorgesehen sein, dass das Lagerelement, das zweite Lagerelement und das dritte Lagerelement in Richtung tangential zur Führungsachse beabstandet voneinander angeordnet sind, und insgesamt über einen Umfangsabschnitt von über 180 Grad, vorzugsweise über 200 Grad, besonders bevorzugt etwa 2 * 120 = 240 Grad verteilt angeordnet sind, insbesondere um eine Dreipunktlagerung zu bilden.

Das Lagerelement, das zweite Lagerelement und das dritte Lagerelement bilden vorzugsweise eine Gruppe, welche in einer Ebene senkrecht zur Führungsachse angeordnet sein können. Es können weitere Gruppen umfasst sein, welche entlang der Führungsachse versetzt angeordnet sind, um ein Neigen des Schiebeglieds zu verhindern.

Es kann ein viertes Lagerelement, vorzugsweise weiterhin ein fünftes Lagerelement, ganz besonders bevorzugt weiterhin ein sechstes Lagerelement umfasst sein, wobei diese Lagerelemente jeweils von dem Lagerelement, dem zweiten Lagerelement und/oder dem dritten Lagerelement längs entlang der Führungsachse beabstandet angeordnet sind.

Das Schiebeglied umfasst vorzugsweise eine exzentrisch zur Führungsachse angeordnete Kraftbeaufschlagungsstelle zur Beaufschlagung des Schiebeglieds mit einer Schiebebewegung. Die Kraftbeaufschlagungsstelle kann z.B. mit einer Führungsstange verbunden sein, um das Schiebeglied entlang der Führungsachse zu verschieben.

Die Kraftbeaufschlagungsstelle des Schiebeglieds ist in tangentialer Richtung zur Führungsachse insbesondere weiter von dem Lagerelement entfernt angeordnet, als sie von dem zweiten und/oder dritten Lagerelement entfernt angeordnet ist. Das nachgiebige Lagerelement kann z.B. gegenüber der Kraftbeaufschlagungsstelle angeordnet sein. Durch diese Anordnung verhalten sich das zweite und dritte Lagerelement, welche insbesondere härter bzw. nicht nachgiebig ausgebildet sind, als eine Art Schiene und bilden mit dem Punkt der Krafteinleitung ein flaches Kräftedreieck. Dies ermöglicht es insbesondere, auch Schiebeglieder mit großer Radialausdehnung und geringer Längsausdehnung zuverlässig zu verschieben.

Die Erfindung betrifft auch ein Schiebeglied, insbesondere für ein Führungssystem zur linearen Fokussierungsführung für ein optisches Gerät, umfassend ein an dem Schiebeglied befestigtes Lagerelement mit einer Lagerfläche zur verschiebbaren Lagerung des Schiebeglieds entlang einer Führungsachse.

Das Lagerelement umfasst wiederum eine nachgiebige, insbesondere elastische Komponente, um eine Nachgiebigkeit des Lagerelements zu bewirken und eine Gleitkomponente, welche die Lagerfläche des Lagerelements bildet, wobei die Gleitkomponente des Lagerelements einen geringeren Reibungskoeffizienten sowie eine geringere Kompressibilität als die nachgiebige Komponente des Lagerelements aufweist.

Vorzugsweise umfasst die nachgiebige Komponente des Lagerelements Schaumstoff, während die Gleitkomponente des Lagerelements Polytetrafluorethylen (PTFE) umfasst.

Bevorzugt sind ein zweites und ein drittes Lagerelement an dem Schiebeglied befestigt, welche jeweils eine Lagerfläche zur verschiebbaren Lagerung des Schiebeglieds entlang der Führungsachse umfassen, und das (erste) Lagerelement weist eine höhere Nachgiebigkeit auf, als das zweite und/oder dritte Lagerelement, welche insbesondere im Wesentlichen keine Nachgiebigkeit aufweisen.

Das Lagerelement, das zweite Lagerelement und das dritte Lagerelement sind wiederum vorzugsweise tangential zur Führungsachse beabstandet voneinander an dem Schiebeglied befestigt und über einen Umfangsabschnitt von über 180 Grad verteilt angeordnet, insbesondere um eine Dreipunktlagerung zu bilden.

Es kann ein viertes Lagerelement, vorzugsweise weiterhin ein fünftes Lagerelement, ganz besonders bevorzugt weiterhin ein sechstes Lagerelement umfasst sein, welche jeweils von dem (ersten) Lagerelement, dem zweiten Lagerelement und/oder dem dritten Lagerelement längs entlang der Führungsachse beabstandet an dem Schiebeglied befestigt sind.

Das Schiebeglied kann eine exzentrisch zur Führungsachse angeordnete Kraftbeaufschlagungsstelle zur Beaufschlagung des Schiebeglieds mit einer Schiebebewegung umfassen, wobei die Kraftbeaufschlagungsstelle insbesondere tangential zur Führungsachse weiter von dem ersten Lagerelement entfernt angeordnet ist als sie von dem zweiten und/oder dritten Lagerelement entfernt angeordnet ist.

Gemäß einer weiteren Ausführungsform des Führungssystems ist zumindest ein Lagerelement als Wälzlager ausgebildet. Ein großer Vorteil im Vergleich zu einem als Gleitlager ausgebildeten Lagerelement ist in der wesentlich geringeren Reibung zu sehen, welche zwischen den beteiligten Komponenten, also dem Schiebeglied und dem Führungskörper, bei einer axialen Relativbewegung zueinander auftritt. Im Gegensatz zu einer Gleitlagerung tritt bei einer Wälzlagerung im Wesentlichen nur eine Rollreibung auf.

Das Radialspiel zwischen Führungskörper und Schiebeglied kann auf diese Weise minimiert werden. Es sind auch Ausführungsformen möglich, bei denen kein Radialspiel auftritt, sondern ein geringes Übermaß vorgesehen ist.

Um eine Verschiebbarkeit des Schiebegliedes entlang der Führungsachse relativ zu dem Führungskörper zu ermöglichen, bietet es sich an, Kugeln als Wälzkörper zu verwenden. Von Vorteil ist daher zumindest ein Lagerelement des Führungssystems gemäß dieser Ausführungsform als Kugellager ausgebildet. Ein derartiges Lagerelement kann dabei eine, bevorzugt aber mehr als eine Kugel umfassen. In einer vorteilhaften Ausführungsform umfasst ein Lagerelement eine Anordnung mit einer Anzahl von zwei bis zu zehn Kugeln, in einer besonders geeigneten Ausführungsform fünf Kugeln.

Zusätzlich zu dem Lagerelement können insbesondere ein zweites und ein drittes Lagerelement umfasst sein, welche wiederum jeweils als Wälzlager, vorzugsweise als Kugellager, ausgebildet sind, derart, dass eine axiale Verschiebbarkeit des Schiebeglieds entlang der Führungsachse ermöglicht wird.

Es kann auch bei der Ausführungsform mit Wälzlagern als Lagerelement vorgesehen sein, dass das Lagerelement, das zweite Lagerelement und das dritte Lagerelement in Richtung tangential zur Führungsachse beabstandet voneinander angeordnet sind, und insgesamt über einen Umfangsabschnitt von über 180 Grad, vorzugsweise über 200 Grad, besonders bevorzugt etwa 2 * 120 = 240 Grad verteilt angeordnet sind, insbesondere um eine Dreipunktlagerung zu bilden.

Das Lagerelement, das zweite Lagerelement und das dritte Lagerelement bilden vorzugsweise eine Gruppe, welche in einer Ebene senkrecht zur Führungsachse angeordnet sein können. Es können ebenso weitere Gruppen umfasst sein, welche entlang der Führungsachse versetzt angeordnet sind, um ein Neigen des Schiebeglieds zu verhindern.

Es kann ein viertes Lagerelement, vorzugsweise weiterhin ein fünftes Lagerelement, ganz besonders bevorzugt weiterhin ein sechstes Lagerelement umfasst sein, wobei diese Lagerelemente jeweils von dem Lagerelement, dem zweiten Lagerelement und/oder dem dritten Lagerelement längs entlang der Führungsachse beabstandet angeordnet sind.

Zur Aufnahme des zumindest einen Wälzkörpers kann das Schiebeglied mit einer Ausnehmung auf seiner Mantelfläche zur teilweisen Aufnahme des Wälzkörpers des Lagerelements ausgebildet sein. Im Fall von Kugeln als Wälzkörper, insbesondere im Fall von mehr als einer Kugel, kann die Ausnehmung in Form einer Längsnut ausgebildet sein. Eine parallel zur Führungsachse auf der Mantelfläche des Schiebeglieds ausgebildete Längsnut ermöglicht es, im Fall von Kugeln als Wälzkörper mehr als eine Kugel aufzunehmen. Die Kugeln sind demnach parallel zur Führungsachse angeordnet.

So ist es in einer besonders bevorzugten Ausführungsform möglich, mehrere Kugeln, beispielsweise fünf Kugeln, welche mit einer Kette oder mit einem Käfig gehaltert sein können, in eine entsprechend in ihrer Länge dimensionierte Längsnut einzulegen. Die Längsnut kann V-förmig ausgebildet sein und einen in Richtung Führungsachse laufenden Spitzwinkel zwischen 70° und 110°, bevorzugt zwischen 80° und 100° und besonders bevorzugt zwischen 85° und 95° aufweisen. Eine in die Längsnut eingelegte Kugel kann damit zwei Kontaktbereiche mit den sich gegenüberliegenden beiden Seitenflächen der Längsnut bilden.

Die Tiefe der Ausnehmung ist dabei auf die Größe der aufzunehmenden Wälzkörper abgestimmt. Vorzugsweise ragen in die Ausnehmung eingelegte Wälzkörper radial über die Mantelfläche des Schiebeglieds hervor, so dass ein Kontakt zwischen einem eingelegten Wälzkörper und einem umgebenden Führungskörper ermöglicht wird, wenn das Schiebeglied in den Führungskörper eingeführt ist. Die Innenfläche des Führungskörpers bildet demnach die Widerlagerfläche des Wälzkörpers und ermöglicht ein Abrollen desselben bei einer axialen Verschiebung des Schiebeglieds relativ zum Führungskörper.

Das Lagerelement mit Wälzkörper braucht nicht zwangsläufig in die Ausnehmung an dem Schiebeglied eingelegt zu werden. Alternativ kann das Lagerelement auch an dem Führungskörper angeordnet sein. Hierzu ist der Führungskörper mit entsprechenden Ausnehmungen zu versehen, um den Wälzkörper aufzunehmen, wohingegen die Mantelfläche des Schiebelements die zugehörige Widerlagerfläche bildet. Es sind auch Ausführungsformen denkbar, bei denen jeweils in montierter Position sich gegenüberliegende Abschnitte von Führungskörper und Schiebeglied mit Ausnehmungen zur Aufnahme des Wälzkörpers ausgebildet sind. Allerdings sind hier die Herstellkosten höher, da jeweils zwei Komponenten bearbeitet werden müssen.

Um eine spielfreie axiale Verschiebbarkeit von Schiebeglied und Führungskörper zu erhalten, ist das Lagerelement dabei vorzugsweise derart dimensioniert, dass es ein leichtes Übermaß bezüglich des Radialspiels aufweist. Das Übermaß des Lagers kann dabei in einem Bereich von wenigen µm liegen bis hin zu 100 µm oder sogar darüber. Vorteilhaft ist ein Übermaß des Lagers von etwa 5 µm bis hin zu 120 µm. Letztendlich ist das Übermaß des Lagers derart auszuwählen, dass in montierter Position ein axiales Verschieben des Schiebeglieds in dem Führungskörper möglich ist, wobei gleichzeitig möglichst kein Spiel zwischen Schiebeglied und Lagerelement sowie dem Führungskörper vorhanden ist.

Im Fall von drei Lagerelementen, welche in einer Ebene senkrecht zur Führungsachse angeordnet sein können, bietet es sich an, diese gleichmäßig über den Umfang zu verteilen. Zwischen jeweils zwei Längsnuten liegt dann ein Winkel von 120°.

Die Erfindung betrifft auch ein optisches Gerät, insbesondere ein Fernglas, mit einem Führungssystem und/oder einem Schiebeglied, wobei das Schiebeglied als Fokussierglied und insbesondere als Linsenfassung ausgebildet ist.

Im Folgenden wird die Erfindung anhand von Ausführungsbeispielen und unter Bezugnahme auf die Figuren näher erläutert, wobei gleiche und ähnliche Elemente teils mit gleichen Bezugszeichen versehen sind und die Merkmale der verschiedenen Ausführungsbeispiele miteinander kombiniert werden können.

Es zeigen:
- Fig. 1: (a) eine Vorderansicht eines Schiebeglieds, angeordnet innerhalb eines Führungskörpers, (b) eine Detailansicht im Bereich eines Lagerelements und (c) eine Detailansicht im Bereich eines zweiten/dritten Lagerelements,
- Fig. 2: eine perspektivische Ansicht des Schiebeglieds aus Fig. 1,
- Fig. 3: (a) eine auf das Lagerelement gerichtete Seitenansicht, (b) eine Vorderansicht, (c) eine auf die Kraftbeaufschlagungsstelle gerichtete Seitenansicht und (d) eine Rückansicht des Schiebeglieds aus Fig. 2,
- Fig. 4: eine perspektivische Ansicht und eine Seitenansicht des Lagerelements,
- Fig. 5: eine perspektivische Ansicht und eine Seitenansicht des zweiten/dritten Lagerelements,
- Fig. 6: eine perspektivische Ansicht einer weiteren Ausführungsform eines Schiebeglieds,
- Fig. 7: (a) eine auf das Lagerelement gerichtete Seitenansicht, (b) eine Vorderansicht, (c) eine auf die Kraftbeaufschlagungsstelle gerichtete Seitenansicht und (d) eine Rückansicht des Schiebeglieds aus Fig. 6,
- Fig. 8: eine Schnittansicht eines Schiebeglieds, angeordnet innerhalb eines Führungskörpers einer weiteren Ausführungsform mit drei als Wälzlager ausgebildeten Lagerelementen,
- Fig. 9: eine schematische Ansicht eines Fernglases und
- Fig. 10: eine schematische Ansicht eines Zielfernrohrs.

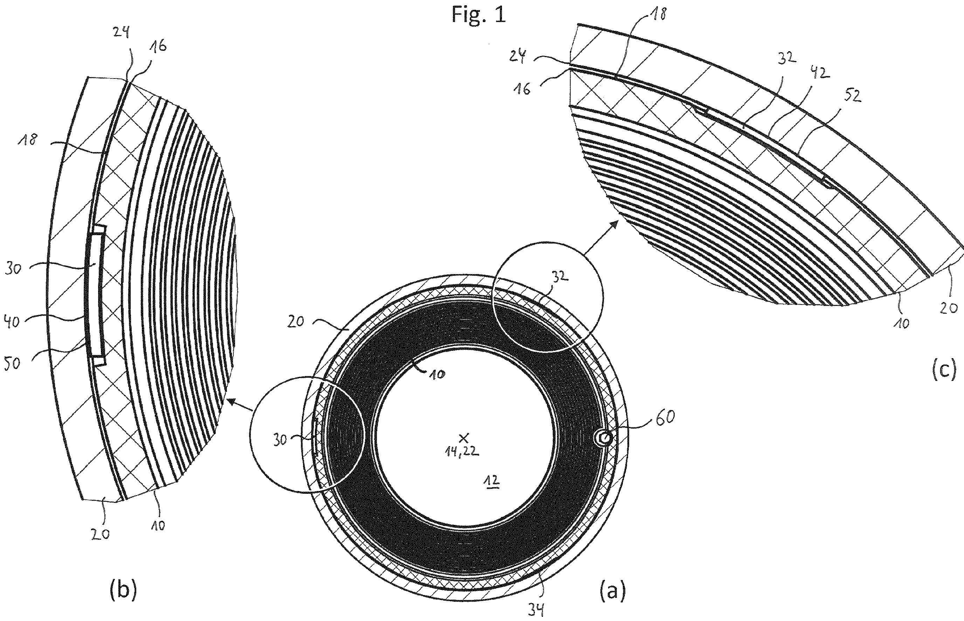

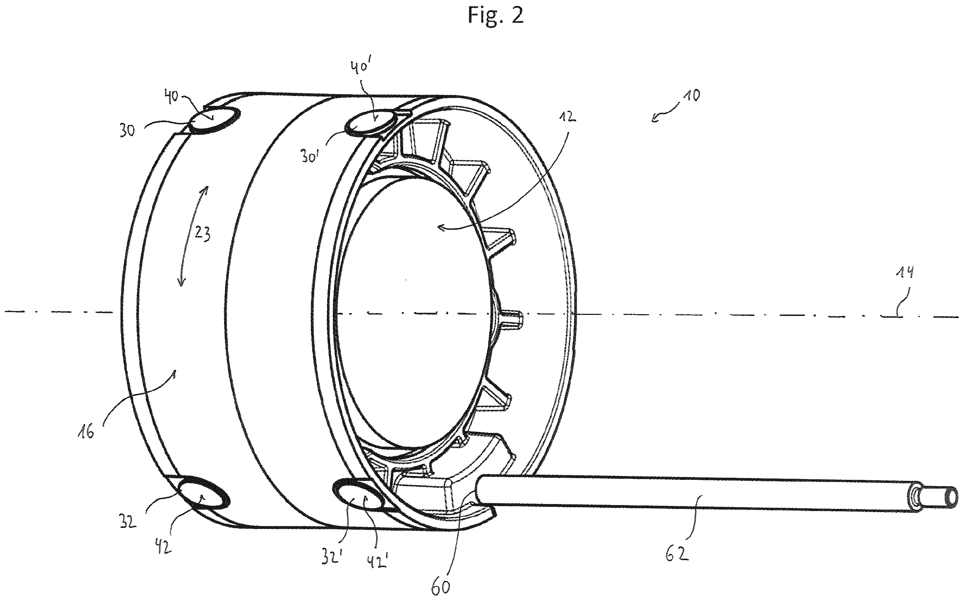

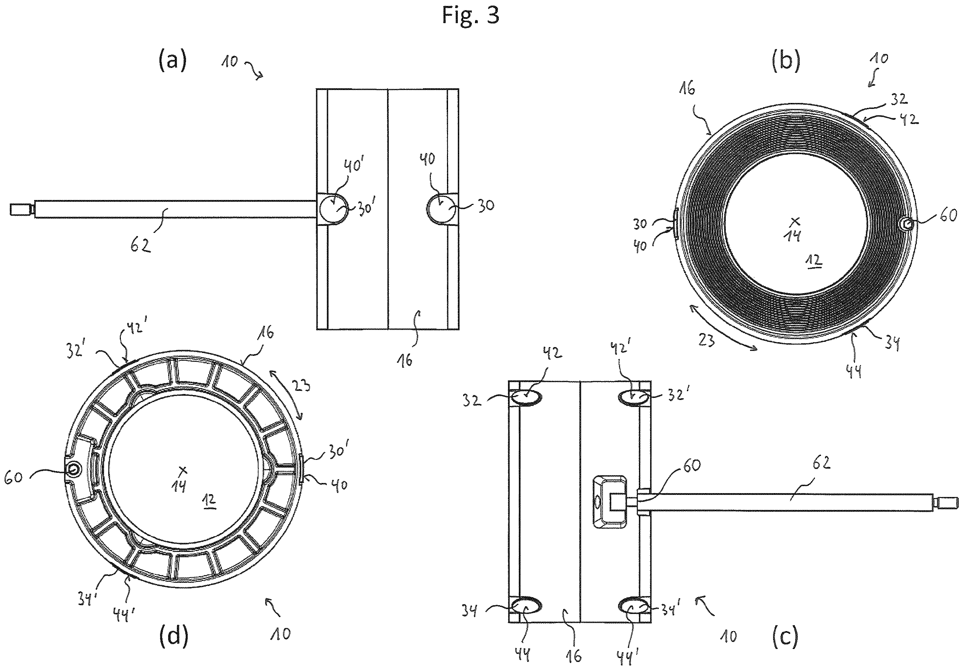

Bezugnehmend auf Fig. 1 bis Fig. 3 weist ein ringförmiges Schiebeglied 10 gemäß einer ersten Ausführungsform eine zentrale Öffnung 12 mit einer Fassung zur Aufnahme einer optischen Komponente, beispielsweise einer Linse auf. Das Schiebeglied 10 definiert somit eine optische Achse 14, entlang derer es verschoben werden kann. Das Schiebeglied 10 wird dabei in einem als Führungshülse ausgebildeten Führungskörper 20 geführt, wobei der Führungskörper 20 eine Führungsachse 22 definiert, welche parallel zur optischen Achse 14 verläuft.

Die innere Oberfläche 24 des tubulären Führungskörpers 20 ist einer äußeren Oberfläche 16 des Schiebeglieds 10 zugewandt, wobei zwischen der innere Oberfläche 24 des Führungskörpers 20 und der äußeren Oberfläche 16 des Schiebeglieds 10 ein Radialspiel 18 verbleibt, welches die Verschiebbarkeit gewährleistet.

Das Radialspiel 18 wird ausgeglichen durch als Gleitpads ausgebildete Lagerelemente 30, 32, 34, 30', 32', 34', welche auf der äußeren Oberfläche 16 des Schiebeglieds 10 befestigt, z.B. angeklebt sind. Die auf der einen Seite selbstklebenden Lagerelemente 30, 32, 34, 30', 32', 34' weisen jeweils auf der anderen Seite eine als glatte Gleitfläche ausgebildete Lagerfläche 40, 42, 44, 40', 42', 44' auf, welche der inneren Oberfläche 24 des Führungskörpers 20 zugewandt sind. Die innere Oberfläche 24 bildet jeweils zugehörige Widerlagerflächen 50, 52 für einen Gleitkontakt bei Verschiebung des Schiebeglieds 10. Zur Verbesserung der Gleiteigenschaften kann vorgesehen sein, dass der Führungskörper 20, seine innere Oberfläche 24 oder zumindest die Widerlagenflächen 50, 52 mit einer Gleitschicht beschichtet sind, um eine glattere Oberfläche zu erlangen. Dazu kann etwa ein Gleitlack zum Einsatz kommen.

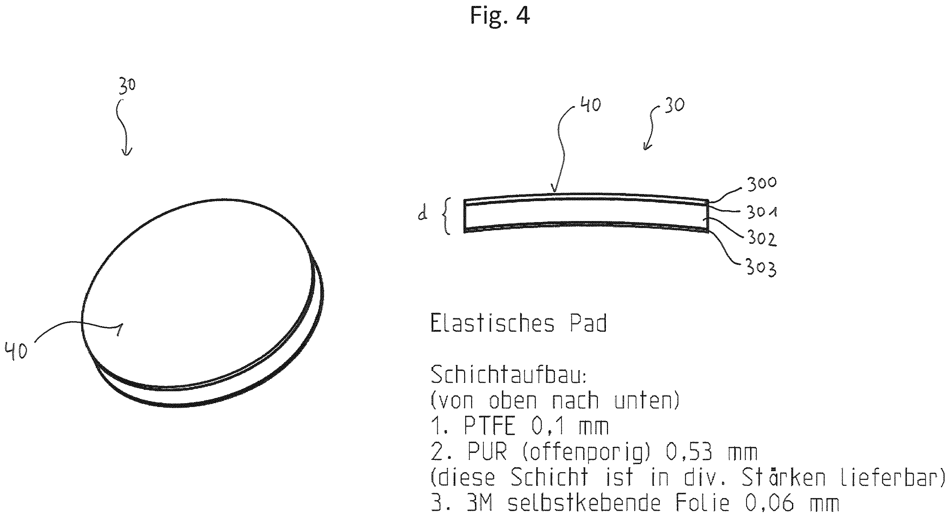

Fig. 4 zeigt beispielhaft das mehrschichtig aufgebaute Lagerelement 30, wobei das Lagerelement 30' in dem gezeigten Beispiel identisch ausgebildet ist. Die Lagerelemente 30, 30' weisen eine Übermaßpassung für das zu überbrückende Radialspiel 18, also den Abstand zwischen dem Schiebeglied 10 und dem Führungskörper 20 auf. Allerdings sind die Lagerelemente 30, 30' zugleich nachgiebig ausgebildet, so dass die Übermaßpassung ausgeglichen wird, wenn das Schiebeglied 10 mit dem Führungskörper 20 in Kontakt steht. Mit anderen Worten werden die Lagerelemente 30, 30' komprimiert und das Schiebeglied 10 in Position gehalten.

Das Übermaß liegt dabei in einem Bereich von 0,01 mm bis 0,7 mm, bevorzugt in einem Bereich von 0,03 mm bis 0,5 mm. Im beispielhaft gezeigten Fall beträgt das Übermaß 0,1 mm.

Die Lagerelemente 30, 30' weisen eine Dicke d auf, welche im nicht-komprimierten Zustand im Bereich von 0,1 mm bis 3,2 mm liegt, vorzugsweise im Bereich von 0,2 mm bis 1,6 mm liegt, besonders bevorzugt im Bereich von 0,3 mm bis 1,2 mm liegt. Noch bevorzugter kann eine Dicke im Bereich von 0,5 mm bis 1,0 mm sein. In dem dargestellten Beispiel ist eine Dicke von 0,69 mm vorgesehen.

Die Lagerelemente 30, 30', weisen eine in diesem Beispiel als PTFE-Schicht ausgebildete Gleitkomponente 300 auf, welche die jeweilige Lagerflächen 40, 40' bildet. Ferner weisen die Lagerelemente 30, 30' eine in diesem Beispiel als PU-Schaumstoff-Schicht ausgebildete nachgiebige Komponente 302 auf. Diese beiden Schichten bzw. Komponenten sind in diesem Beispiel miteinander verbunden durch eine als PE(T)-Zwischenschicht ausgebildete Verbindungskomponente 301. Auf der der Gleitkomponente abgewandten Seite der nachgiebigen Komponente ist in diesem Beispiel eine als selbstklebende Folie ausgebildete Klebekomponente 303 angebracht. Mit der Klebekomponente 303 sind die Lagerelemente 30, 30' auf dem Schiebeglied 10 angeklebt.

Mit anderen Worten weist das Lagerelement 30 (und 30') jeweils eine als Schaumstoffkern ausgebildete nachgiebige Komponente 302 auf, die leicht unter Vorspannung eingebaut wird und dadurch die Baugruppe spielfrei drückt. Die elastische Komponente kann aus Polyurethan (PUR) gefertigt sein, insbesondere als offenporiger Polyurethan-Schaum ausgebildet sein, z.B. in Form einer Polyurethan-Matte.

Die Gleitkomponente 300 kann eine Dicke im Bereich von 0,01 mm bis 2 mm aufweisen, vorzugweise im Bereich von 0,02 mm bis 1 mm aufweisen, besonders bevorzugt im Bereich von 0,03 mm bis 0,3 mm aufweisen. In dem dargestellten Beispiel ist eine PTFE-Schicht der Dicke 0,1 mm vorgesehen. Die Gleitkomponente kann aber z.B. auch als Gleitlack ausgebildet sein.

Die nachgiebige Komponente 302 kann eine Dicke im Bereich von 0,1 mm bis 3,0 mm aufweisen, vorzugweise im Bereich von 0,2 mm bis 2,0 mm aufweisen, besonders bevorzugt im Bereich von 0,3 mm bis 1,0 mm aufweisen. Noch bevorzugter kann eine Dicke im Bereich von 0,4 mm bis 0,8 mm sein. In dem dargestellten Beispiel ist eine PUR-Schicht der Dicke 0,53 mm vorgesehen.

Die nachgiebige Komponente 302 hat vorzugsweise eine geringere Dichte als die Gleitkomponente 300. Insbesondere kann die nachgiebige Komponente 302 eine Dichte im Bereich von 5 pcf bis 50 pcf (pounds per cubic foot) aufweisen, vorzugsweise im Bereich von 8 pcf bis 35 pcf aufweisen, besonders bevorzugt im Bereich von 10 pcf bis 30 pcf aufweisen. Noch bevorzugter kann eine Dichte im Bereich von 20 pcf bis 30 pcf sein. In dem dargestellten Beispiel hat die PUR-Schicht eine Dichte von 25 pcf.

Durch Wahl der Dichte der nachgiebigen Komponente und auch durch die Fläche des Lagerelements kann in vorteilhafter Weise die Kraft eingestellt werden, die im eingebauten Zustand ausgeübt wird. Auf diese Weise kann die Lagerung präzise austariert werden, insbesondere im Hinblick auf die Abmessungen und/oder die Materialien des Führungssystems. Ein weiterer Vorteil ist die Möglichkeit der Kompensation von Fertigungstoleranzen, indem etwa Lagerelemente mit einer bestimmten Dichte und/oder einer bestimmten Dicke in Abhängigkeit von dem Radialspiel ausgewählt werden.

Die Klebekomponente 303 kann z.B. eine Dicke im Bereich von 0,01 mm bis 0,3 mm aufweisen, vorzugweise im Bereich von 0,02 mm bis 0,15 mm aufweisen. In dem dargestellten Beispiel ist eine selbstklebende Folie der Dicke 0,06 mm vorgesehen.

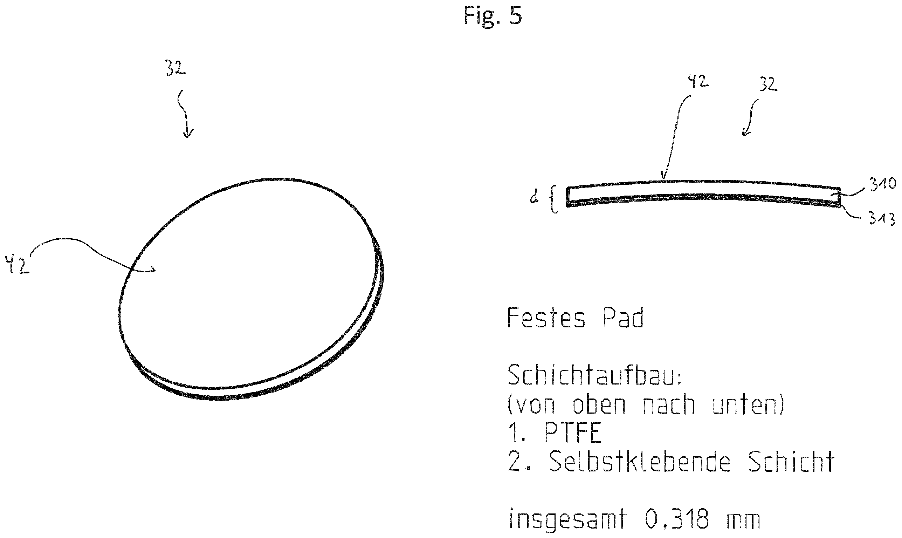

Fig. 5 zeigt beispielhaft das Lagerelement 32, wobei die Lagerelemente 34 sowie 32' und 34' in dem gezeigten Beispiel identisch ausgebildet sind. Die Lagerelemente 32, 34, 32', 34' sind gegenüber den Lagerelementen 30, 30' als im Wesentlichen feste Gleitpads ausgebildet. Sie weisen eine als PTFE-Schicht ausgebildete Gleitkomponente 310 und eine damit verbundene als selbstklebende Folie ausgebildete Klebekomponente 313 auf, mit welcher sie auf dem Schiebeglied 10 angeklebt sind. Die Dicke d der Lagerelemente 32, 34, 32', 34' beträgt vorzugsweise 0,1 mm bis 1 mm, besonders bevorzugt 0,2 mm bis 0,6 mm und ganz besonders bevorzugt 0,25 mm bis 0,5 mm. In dem gezeigten Beispiel ist eine Dicke von 0,318 mm vorgesehen.

Die festen Lagerelemente 32, 34 (und 32', 34') sind, insbesondere betrachtet entlang einer tangentialen Richtung 23, näher an einer exzentrisch positionierten Kraftbeaufschlagungsstelle 60 angeordnet, als das nachgiebige Lagerelement 30 (und 30'). Dadurch wird eine besonders zuverlässige Führung des Schiebeglieds 10 entlang der Führungsachse 22 erreicht.

Die Kraftbeaufschlagungsstelle 60, welche hier als Aufnahme für eine Fokussierstange 62 ausgebildet ist, dient zur Übertragung einer Schiebebewegung auf das Schiebeglied 10. Bei Übertragung einer Schiebekraft bewirken die festen Lagerelemente 32, 34 (und 32', 34') eine stabile Führung, ohne dass das Schiebeglied 10 zu kippen neigt. Die festen Lagerelemente 30 bilden gewissermaßen eine stabile Schiene, gegen welche das Schiebeglied durch die nachgiebigen Lagerelemente angedrückt wird. Auf diese Weise wird eine sichere Führung bei der Verschiebung gewährleistet.

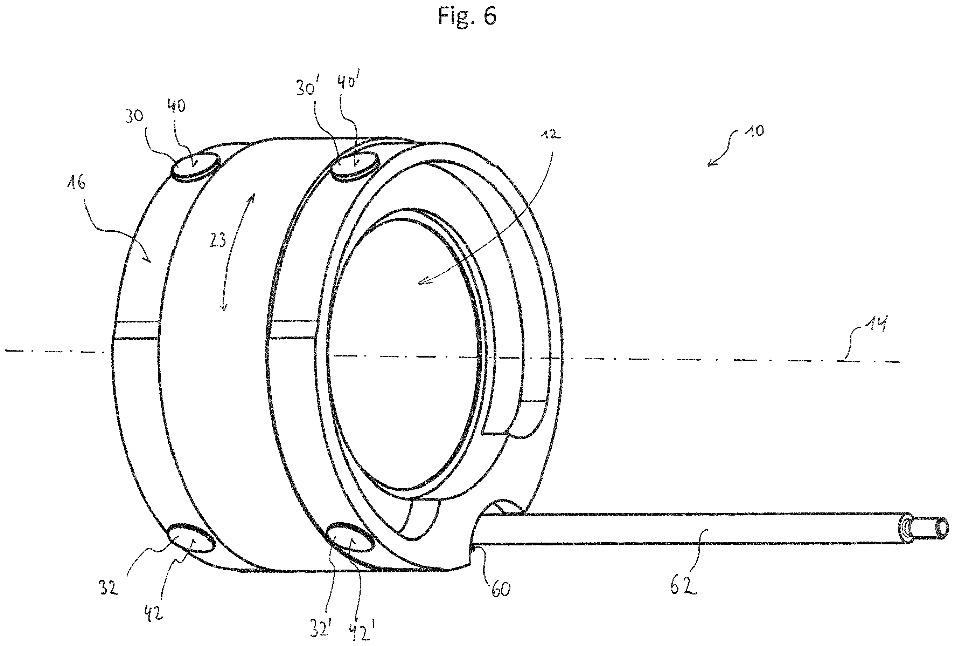

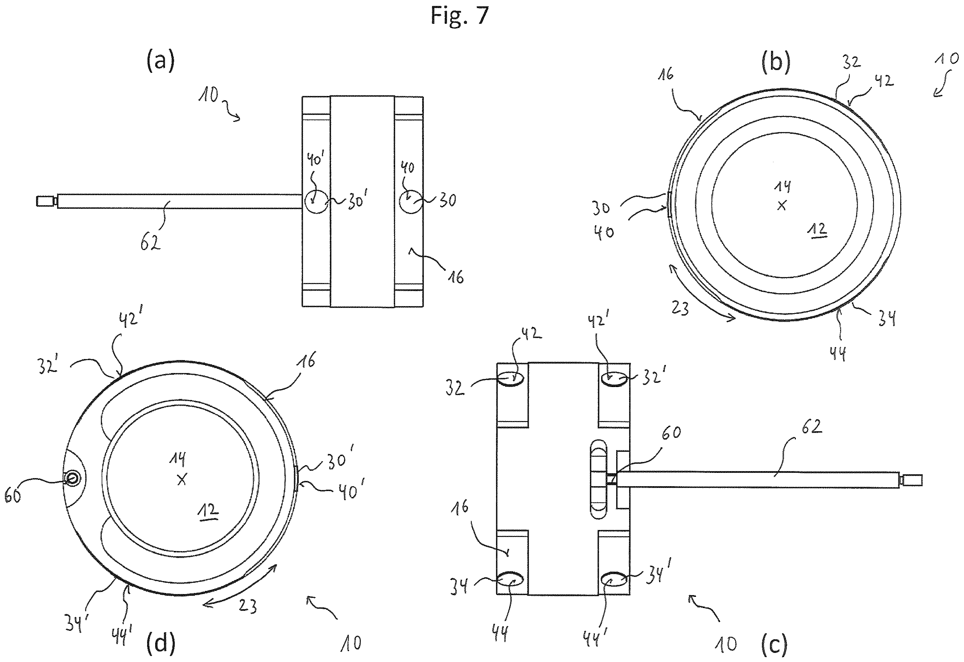

Die Kraftbeaufschlagungsstelle 60 kann insbesondere als Langloch ausgebildet sein, wobei die Fokussierstange 62 in das Langloch axialspielfrei eingreift.
Die in den Fig. 1 bis Fig. 3 dargestellte Ausführungsform des Schiebeglieds 10 ist als Kunststoffspritzgussteil ausgebildet. Das Schiebeglied 10 kann jedoch nicht nur aus Kunststoff gefertigt sein, sondern es kommen auch zahlreiche andere Materialien in Betracht. Insbesondere kann das Schiebeglied 10 aus Leichtmetall gefertigt sein, beispielsweise aus Magnesium und/oder aus Aluminium. Eine Ausführungsform eines Schiebeglieds 10 aus Leichtmetall ist in den Fig. 6 und Fig. 7 gezeigt.

Es kann bevorzugt sein, eine Schmierung des Führungssystems zu vermeiden, da hierdurch unerwünschte optische Reflexe entstehen können. Andererseits kann, insbesondere bei ungünstigen Verhältnissen aus Durchmesser und Länge des Schiebeglieds und auch in Abhängigkeit von den verwendeten Materialien mitunter ein Verkippen des Schiebeglieds beim Losfahren oder beim Lastwechsel auftreten.

Zur Vermeidung solcher Kippmomente kann eine Schmierung, z.B. mit einem Teflonfett zweckmäßig sein. Zur Vermeidung optischer Reflexe kann ein lichtabsorbierendes bzw. lichtfilterndes Schmiermittel verwendet werden, welches beispielsweise schwarze Pigmente und/oder Kohlenstoffnanoröhrchen umfassen kann.

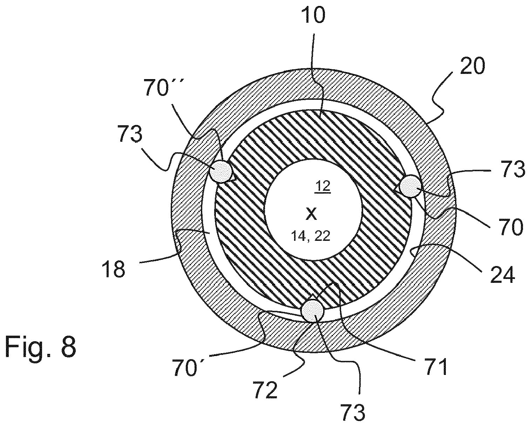

Fig. 8 zeigt schließlich eine Schnittansicht eines als Schiebeglied ausgebildeten Schiebeglieds 10 angeordnet innerhalb eines Führungskörpers 20 gemäß einer weiteren Ausführungsform.

Gemäß dieser weiteren Ausführungsform des Führungssystems ist zumindest ein Lagerelement 70 als Wälzlager ausgebildet. Die Ausbildung des zumindest einen Lagerelements 70 als Wälzlager bietet den Vorteil einer deutlich geringeren Reibung zwischen dem Schiebeglied 10 und dem Führungskörper 20 bei einer axialen Relativbewegung zueinander, da die Kontaktbereiche zwischen Lagerelement 70 und Schiebeglied 10 sowie Führungskörper 20 deutlich kleiner sind und im Wesentlichen nur eine Rollreibung bei einer Verschiebung auftritt.

Um eine Verschiebbarkeit des Schiebegliedes 10 entlang der Führungsachse 22 relativ zu dem Führungskörper 20 zu ermöglichen, werden, wie im abgebildeten Beispiel, Kugeln 73 als Wälzkörper für das Lagerelement 70 verwendet. Kugeln 73 bieten den großen Vorteil, dass eine einfache axiale Verschiebbarkeit des Schiebeglieds 10 gegenüber dem Führungskörper 20 gegeben ist.

Vorzugsweise werden mehr als eine Kugel pro Lagerelement eingesetzt, welche parallel zur Führungsachse 22 angeordnet sind. Diese Kugeln können in einem Käfig oder in einer Kette (nicht abgebildet) gehaltert sein. Als vorteilhaft haben sich zwei bis 10 Kugeln pro Lagerelement herausgestellt. In einer besonders bevorzugten Ausführungsform kommen pro Lagerelement jeweils 5 Kugeln zum Einsatz, welche von einer Kette gehalten werden.

Im abgebildeten Ausführungsbeispiel kommen insgesamt drei Lagerelemente 70, 70' und 70" zum Einsatz, welche regelmäßig in einem Winkelabstand von 120° in einer Ebene senkrecht zur Führungsachse 22 auf dem äußeren Umfangsbereich des Schiebeglieds 10 angeordnet sind. Auf diese Weise wird eine Dreipunktlagerung gebildet. Neben dieser Gruppe von drei Lagerelementen 70, 70' und 70" können weitere Gruppen von Lagerelementen vorgesehen sein (nicht abgebildet), welche axial entlang der Führungsachse versetzt angeordnet sind. Diese Lagerelemente können auch als Gleitlager ausgebildet sein.

Zur Aufnahme eines Lagerelements 70 ist das Schiebeglied 10 mit einer Ausnehmung 71 auf seiner Mantelfläche ausgebildet, welche der teilweisen Aufnahme des Wälzkörpers dient. Zur Aufnahme einer Kugelkette ist diese Ausnehmung 71 länglich und mit einem V-förmigen Querschnitt ausgebildet. Die auf diese Weise gebildete Längsnut auf der Mantelfläche des Schiebeglieds 10 ist in ihrer Länge derart konfiguriert, dass die Aufnahme einer vorbestimmten Anzahl von Wälzkörpern bzw. Kugeln ermöglicht wird.

Bedingt durch die V-förmige Querschnittsform laufen die beiden Seitenflächen der Ausnehmung in einem Spitzwinkel zusammen, welcher in dem abgebildeten Beispiel etwa 90° beträgt. Auf diese Weise kann die Kugel 73 stabil gehaltert werden, wobei zwischen der Kugel 73 und der Ausnehmung 71 lediglich zwei kleine Kontaktbereiche gebildet werden, die eine nur sehr geringe Rollreibung bei einer axialen Relativbewegung bewirken.

Die Tiefe der Ausnehmung 71 ist dabei auf die Größe der aufzunehmenden Wälzkörper, im Beispiel auf die Größe der Kugeln 73, derart abgestimmt, dass die eingelegten Kugeln 73 radial über die Mantelfläche des Schiebeglieds 10 hervorragen und so ein Kontaktbereich 72 mit der inneren Oberfläche 24 des Führungskörpers 20 hergestellt wird, wenn das Schiebeglied 10 mit den Lagerelementen 70, 70'und 70" montiert ist.

Bei einer axialen Verschiebung des Schiebeglieds 10 relativ zum Führungskörper 20 rollen daher die Kugeln 73 einerseits auf den Seitenflächen der Ausnehmung 71 und andererseits auf der inneren Oberfläche 24 des Führungskörpers 20 ab. Diese Flächen bilden demnach die Widerlagerflächen der Lagerelemente 70, 70'und 70".

Um eine nach Möglichkeit spielfreie axiale Verschiebbarkeit von Schiebeglied 10 und Führungskörper 20 zu erhalten, weisen die Lagerelemente 70, 70' und 70" eine leichte Übermaßpassung für das zu überbrückende Radialspiel 18 auf. Auf diese Weise erfolgt eine leichte Pressung, wenn das Schiebeglied 10 mit dem Führungskörper 20 in Kontakt steht.

Das Übermaß ist von daher klein zu halten und beträgt zwischen 0,003 und 0,150 mm, bevorzugt zwischen 0,005 und 0,120 mm. In dem abgebildeten Beispiel liegt das Übermaß bei 0,05 mm.

Auf eine Schmierung kann bei dieser Ausführungsform weitgehend oder vollständig verzichtet werden. Von Vorteil ist weiterhin ein sehr leichter Gang ohne Klappern. Schließlich können auch Fertigungstoleranzen sehr einfach ausgeglichen werden durch die Auswahl von entsprechend im Durchmesser geeigneten Kugeln.

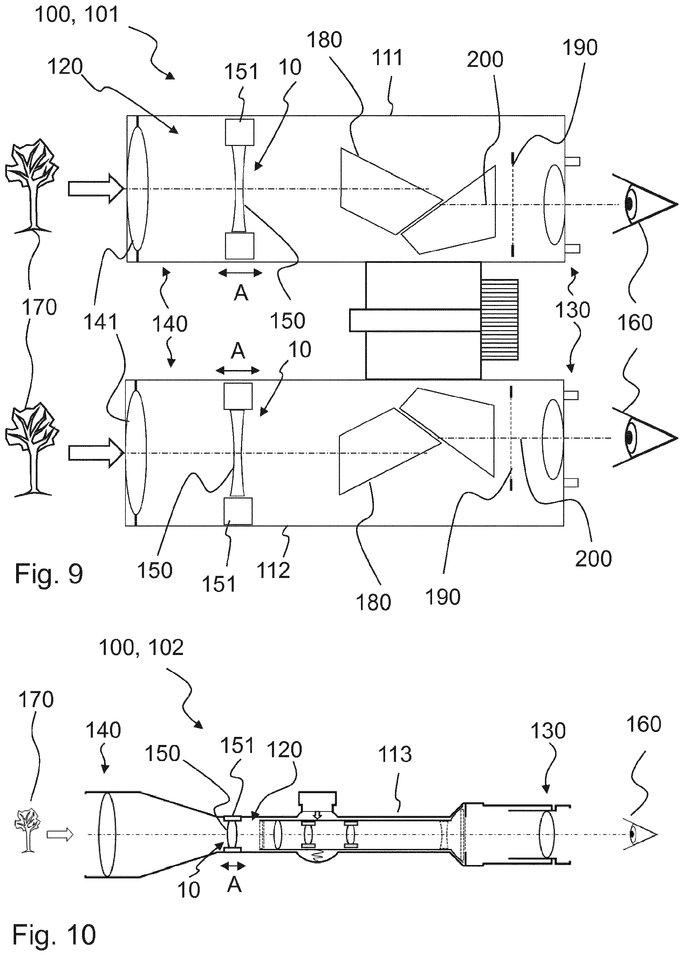

Die Fig. 9 zeigt eine schematische Ansicht eines erfindungsgemäßen optischen Gerätes 100 am Beispiel eines Fernglases 101, Fig. 10 zeigt eine schematische Ansicht eines erfindungsgemäßen optischen Gerätes 100 am Beispiel eines Zielfernrohrs 102. Das optische Gerät 100, also beispielsweise das Fernglas 101 oder das Zielfernrohr 102, sind mit einem erfindungsgemäßen Führungssystem, insbesondere zur linearen Fokussierungsführung, ausgestattet. Demzufolge weisen sie einen Führungskörper 20 sowie ein Schiebeglied 10 auf.

Ein binokulares Fernglas 101 besteht aus zwei parallel zueinander angeordneten Tuben 111, 112, die jeweils ein optisches System, beziehungsweise eine Optik 120 enthalten. Ein Zielfernrohr 102 besteht aus einem Tubus 113, der ebenfalls ein optisches System beziehungsweise eine Optik 120 enthält.

Das optische System oder die Optik 120 bezeichnet die Gesamtheit der optischen Elemente des jeweiligen Tuben 111, 112, 113 und besteht im Beispiel der Fig. 9 aus mindestens einem Objektiv 140, einer Aperturblende, einem Prismensystem 180 und einem Okular 130. Durch das Objektiv 140 und durch das Okular 130 wird jeweils eine optische Achse 200 festgelegt.

Das Objektiv kann aus mehreren einzelnen Linsen 141, 150 bestehen, zu dessen Fokussierung das erfindungsgemäße Führungssystem verwendet wird zum Zwecke einer Fokussierung eines durch das binokulare Fernglas 101 oder durch das Zielfernrohr 102 betrachteten Objekts 170 durch einen Nutzer 160 mittels des Schiebeglieds 10 auf die Zwischenbildebene 190.

Das Schiebeglied 10 umfasst eine Fokussierlinse 150 mit einer als Linsenfassung ausgebildeten Halterung 151. Die Bewegungsrichtung des Schiebeglieds 10 in den jeweiligen Tuben ist mit "A" gekennzeichnet.

### Bezugszeichenliste:

- 10: Schiebeglied
- 12: Öffnung
- 14: optische Achse
- 16: äußere Oberfläche
- 18: Radialspiel
- 20: Führungskörper
- 22: Führungsachse
- 23: tangentiale Richtung
- 24: innere Oberfläche
- 30, 30': Lagerelemente
- 32, 32': Lagerelemente
- 34, 34': Lagerelemente
- 40, 40': Lagerfläche
- 42, 42': Lagerfläche
- 44, 44': Lagerfläche
- 50: Widerlagerfläche
- 52: Widerlagerfläche
- 60: Kraftbeaufschlagungsstelle
- 62: Fokussierstange
- 70, 70', 70": Lagerelement
- 71: Ausnehmung
- 72: Kontaktbereich
- 73: Kugel
- 100: optisches Gerät
- 101: Fernglas
- 102: Zielfernrohr
- 111: Tubus
- 112: Tubus
- 113: Tubus
- 120: Optik
- 130: Okular
- 140: Objektiv
- 141: Linse
- 150: Fokussierlinse
- 151: Halterung
- 160: Nutzer
- 170: Objekt
- 180: Prismensystem
- 190: Zwischenbildebene
- 200: optische Achse
- 300: Gleitkomponente
- 301: Verbindungskomponente
- 302: nachgiebige Komponente
- 303: Klebekomponente
- 310: Gleitkomponente
- 313: Klebekomponente

## Patentansprüche

1. Führungssystem, insbesondere zur linearen Fokussierungsführung für ein optisches Gerät (100), umfassend:
- einen Führungskörper (20), welcher eine Führungsachse (22) definiert und
- ein Schiebeglied (10), welches entlang der Führungsachse (22) relativ zu dem Führungskörper (20) verschiebbar gelagert ist und
- ein Lagerelement (30, 30', 32, 32', 34, 34') mit einer Lagerfläche zur verschiebbaren Lagerung des Schiebeglieds (10), derart, dass die Lagerfläche mit einer zugehörigen Widerlagerfläche (50, 52) in Gleitkontakt steht, wenn das Schiebeglied (10) entlang der Führungsachse (22) verschoben wird,
- wobei das Lagerelement (30, 30', 32, 32', 34, 34') zwischen dem Schiebeglied (10) und dem Führungskörper (20) derart angeordnet ist, dass das Lagerelement (30, 30', 32, 32', 34, 34') ein sich radial zur Führungsachse (22) erstreckendes Radialspiel (18) zwischen dem Schiebeglied (10) und dem Führungskörper (20) vermindert und
- wobei das Lagerelement (30, 30', 32, 32', 34, 34') eine Übermaßpassung für das Radialspiel (18) und eine Nachgiebigkeit in radialer Richtung zum Ausgleich der Übermaßpassung aufweist.

2. Führungssystem nach Anspruch 1, wobei das Lagerelement (30, 30', 32, 32', 34, 34') an dem Schiebeglied (10) befestigt ist und wobei der Führungskörper (20) die Widerlagerfläche (50, 52) umfasst, derart, dass die Lagerfläche des an dem Schiebeglied befestigten Lagerelements (30, 30', 32, 32', 34, 34') an der Widerlagerfläche (50, 52) des Führungskörpers (20) entlang gleitet, wenn das Schiebeglied (10) entlang der Führungsachse (22) verschoben wird, und/oder wobei der Führungskörper (20) das Schiebeglied (10) radial umgibt, derart, dass eine innere Oberfläche (24) des Führungskörpers (20) einer äußeren Oberfläche (16) des Schiebeglieds (10) zugewandt ist und wobei das Lagerelement an der äußeren Oberfläche (16) des Schiebeglieds (10) befestigt ist und die innere Oberfläche (24) des Führungskörpers (20) die Widerlagerfläche (50, 52) umfasst, und/oder wobei sich das radial zur Führungsachse erstreckende Radialspiel (18) zwischen dem Schiebeglied (10) und dem Führungskörper (20) tangential über den gesamten Umfang erstreckt, derart, dass das Schiebeglied (10) radial zur Führungsachse (22) ringsum von dem Führungselement beabstandet ist.

3. Führungssystem nach einem der vorstehenden Ansprüche,
- wobei das Lagerelement (30, 30', 32, 32', 34, 34') eine nachgiebige, insbesondere elastische Komponente (302) umfasst, um die Nachgiebigkeit des Lagerelements zu bewirken und
- wobei das Lagerelement (30, 30', 32, 32', 34, 34') eine Gleitkomponente (300) umfasst, welche die Lagerfläche des Lagerelements bildet und
- wobei die Gleitkomponente (300) des Lagerelements einen geringeren Reibungskoeffizienten sowie eine geringere Kompressibilität als die nachgiebige Komponente (302) des Lagerelements aufweist, und/oder wobei die nachgiebige Komponente (302) des Lagerelements (30, 30', 32, 32', 34, 34') Schaumstoff umfasst und/oder die Gleitkomponente (300) des Lagerelements Polytetrafluorethylen (PTFE) umfasst.

4. Führungssystem nach einem der vorstehenden Ansprüche, wobei das Lagerelement (30, 30', 32, 32', 34, 34') sich tangential zur Führungsachse (22) über einen Winkel von weniger als 45 Grad, vorzugsweise von weniger als 20 Grad, besonders bevorzugt von weniger als 10 Grad erstreckt.

5. Führungssystem nach einem der vorstehenden Ansprüche, wobei ein zweites und ein drittes Lagerelement (30, 30', 32, 32', 34, 34') umfasst sind, welche jeweils eine Lagerfläche zur verschiebbaren Lagerung des Schiebeglieds (10) umfassen, derart, dass die Lagerflächen des zweiten und dritten Lagerelements jeweils mit einer zugehörigen Widerlagerfläche (50, 52) in Gleitkontakt stehen, wenn das Schiebeglied (10) entlang der Führungsachse (22) verschoben wird, wobei das zweite und dritte Lagerelement vorzugsweise jeweils an dem Schiebeglied (10) befestigt sind und wobei der Führungskörper (20) die jeweilige Widerlagerfläche (50, 52) umfasst, derart, dass die Lagerflächen der an dem Schiebeglied (10) befestigten zweiten und dritten Lagerelemente an den jeweiligen Widerlagerflächen (50, 52) des Führungskörpers (20) entlang gleiten, wenn das Schiebeglied (10) entlang der Führungsachse (22) verschoben wird.

6. Führungssystem nach Anspruch 5, wobei das Lagerelement (30, 30', 32, 32', 34, 34') eine höhere Nachgiebigkeit aufweist, als das zweite und/oder dritte Lagerelement, welche insbesondere im Wesentlichen keine Nachgiebigkeit aufweisen, und/oder wobei das Lagerelement (30, 30', 32, 32', 34, 34'), das zweite Lagerelement und das dritte Lagerelement tangential zur Führungsachse (22) beabstandet voneinander angeordnet sind, und über einen Umfangsabschnitt von über 180 Grad verteilt angeordnet sind, insbesondere um eine Dreipunktlagerung zu bilden.

7. Führungssystem nach einem der Ansprüche 5 bis 6, wobei ein viertes Lagerelement, vorzugsweise weiterhin ein fünftes Lagerelement, ganz besonders bevorzugt weiterhin ein sechstes Lagerelement umfasst sind, welche jeweils von dem Lagerelement, dem zweiten Lagerelement und/oder dem dritten Lagerelement längs entlang der Führungsachse (22) beabstandet angeordnet sind.

8. Führungssystem nach einem der vorstehenden Ansprüche, wobei das Schiebeglied (10) eine exzentrisch zur Führungsachse (22) angeordnete Kraftbeaufschlagungsstelle (60) zur Beaufschlagung des Schiebeglieds (10) mit einer Schiebebewegung umfasst, wobei die Kraftbeaufschlagungsstelle (60) des Schiebeglieds (10) vorzugsweise, insbesondere in tangentialer Richtung zur Führungsachse (22), weiter von dem Lagerelement (30, 30', 32, 32', 34, 34'), entfernt angeordnet ist, als sie von dem zweiten und/oder dritten Lagerelement entfernt angeordnet ist.

9. Führungssystem, insbesondere zur linearen Fokussierungsführung für ein optisches Gerät (100), umfassend:
- einen Führungskörper (20), welcher eine Führungsachse (22) definiert und
- ein Schiebeglied (10), welches entlang der Führungsachse (22) relativ zu dem Führungskörper (20) verschiebbar gelagert ist und
- ein Lagerelement (70), wobei das Lagerelement (70) zumindest ein Wälzlager mit einem Wälzkörper umfasst, derart, dass der Wälzkörper in Kontakt mit dem Schiebeglied (10) und dem Führungskörper (20) steht und wobei der Wälzkörper auf dem Schiebeglied (10) und dem Führungskörper (20) abrollt, wenn das Schiebeglied (10) entlang der Führungsachse (20) verschoben wird, und
- wobei das Lagerelement (70) zwischen dem Schiebeglied (10) und dem Führungskörper (20) derart angeordnet ist, dass das Lagerelement (70) ein sich radial zur Führungsachse (22) erstreckendes Radialspiel (18) zwischen dem Schiebeglied (10) und dem Führungskörper (20) vermindert,
wobei als Wälzkörper vorzugsweise zumindest eine Kugel (73) vorgesehen ist, bevorzugt zwischen zwei und zehn Kugeln, und/oder
wobei das Lagerelement (70) vorzugsweise eine Übermaßpassung für das Radialspiel (18) aufweist.

10. Führungssystem nach dem vorstehenden Anspruch, wobei ein zweites und ein drittes Lagerelement (70', 70") umfasst sind, welche in einer Ebene senkrecht zur Führungsachse (22) und jeweils in einem Winkelabstand von 120° zueinander angeordnet sind.

11. Schiebeglied (10), insbesondere für ein Führungssystem nach einem der Ansprüche 1 bis 8, insbesondere zur linearen Fokussierungsführung für ein optisches Gerät (100), umfassend ein an dem Schiebeglied (10) befestigtes Lagerelement (30, 30', 32, 32', 34, 34') mit einer Lagerfläche zur verschiebbaren Lagerung des Schiebeglieds (10) entlang einer Führungsachse (22),
- wobei das Lagerelement (30, 30', 32, 32', 34, 34') eine nachgiebige, insbesondere elastische Komponente (302) umfasst, um eine Nachgiebigkeit des Lagerelements (30, 30', 32, 32', 34, 34') zu bewirken und
- wobei das Lagerelement (30, 30', 32, 32', 34, 34') eine Gleitkomponente (300) umfasst, welche die Lagerfläche des Lagerelements bildet und
- wobei die Gleitkomponente (300) des Lagerelements (30, 30', 32, 32', 34, 34') einen geringeren Reibungskoeffizienten sowie eine geringere Kompressibilität als die nachgiebige Komponente (302) des Lagerelements (30, 30', 32, 32', 34, 34') aufweist.

12. Schiebeglied (10) nach Anspruch 11, wobei die nachgiebige Komponente (302) des Lagerelements Schaumstoff umfasst und/oder die Gleitkomponente (300) des Lagerelements Polytetrafluorethylen (PTFE) umfasst, und/oder
wobei ein zweites und ein drittes Lagerelement an dem Schiebeglied befestigt sind, welche jeweils eine Lagerfläche zur verschiebbaren Lagerung des Schiebeglieds (10) entlang der Führungsachse (22) umfassen, wobei das Lagerelement (30, 30', 32, 32', 34, 34') eine höhere Nachgiebigkeit aufweist, als das zweite und/oder dritte Lagerelement, welche insbesondere im Wesentlichen keine Nachgiebigkeit aufweisen.

13. Schiebeglied (10) nach einem der Ansprüche 11 oder 12, wobei das Lagerelement (30, 30', 32, 32', 34, 34'), das zweite Lagerelement und das dritte Lagerelement tangential zur Führungsachse (22) beabstandet voneinander an dem Schiebeglied (10) befestigt sind, und über einen Umfangsabschnitt von über 180 Grad verteilt angeordnet sind, insbesondere um eine Dreipunktlagerung zu bilden.

14. Schiebeglied (10) nach einem der Ansprüche 11 bis 13, wobei ein viertes Lagerelement, vorzugsweise weiterhin ein fünftes Lagerelement, ganz besonders bevorzugt weiterhin ein sechstes Lagerelement umfasst sind, welche jeweils von dem Lagerelement, dem zweiten Lagerelement und/oder dem dritten Lagerelement längs entlang der Führungsachse (22) beabstandet an dem Schiebeglied (10) befestigt sind.

15. Schiebeglied (10) nach einem der Ansprüche 11 bis 14, wobei das Schiebeglied (10) eine exzentrisch zur Führungsachse (22) angeordnete Kraftbeaufschlagungsstelle (60) zur Beaufschlagung des Schiebeglieds (10) mit einer Schiebebewegung umfasst, wobei die Kraftbeaufschlagungsstelle (60) insbesondere tangential zur Führungsachse (22) weiter von dem ersten Lagerelement entfernt angeordnet ist als sie von dem zweiten und/oder dritten Lagerelement entfernt angeordnet ist.

16. Schiebeglied (10), insbesondere für ein Führungssystem nach einem der Ansprüche 8 bis 10, insbesondere zur linearen Fokussierungsführung für ein optisches Gerät (100), umfassend auf seiner Mantelfläche zumindest eine parallel zur Führungsachse (22) verlaufende längliche Ausnehmung (71) zur Aufnahme des Lagerelements (70, 70', 70"), wobei das Schiebeglied (10) vorzugsweise auf seiner Mantelfläche in einer Ebene senkrecht zur Führungsachse insgesamt drei parallel zur Führungsachse verlaufende längliche Ausnehmungen (71) zur Aufnahme dreier Lagerelemente (70, 70', 70") aufweist, und/oder wobei die drei länglichen Ausnehmungen (71) vorzugsweise in einem Winkel von 120° zueinander angeordnet sind.

17. Schiebeglied (10) nach dem vorstehenden Anspruch, wobei die Ausnehmung (71) V-förmig ausgebildet ist und wobei die beiden zugehörigen Seitenflächen in einem Spitzwinkel zwischen 70° und 110°, bevorzugt zwischen 80° und 100° und besonders bevorzugt zwischen 85° und 95° zueinander angeordnet sind.

18. Optisches Gerät (100), insbesondere Fernglas (101) oder Zielfernrohr (102), mit einem Führungssystem nach einem der Ansprüche 1 bis 10 und/oder mit einem Schiebeglied (10) nach einem der Ansprüche 11 bis 17, wobei das Schiebeglied (10) insbesondere als Linsenfassung ausgebildet ist.
